# EUROPEAN PATENT SPECIFICATION

(11) **EP 4 461 919 B1**
(45) Date of publication and mention of the grant of the patent: **10.12.2025**
(21) Application number: 23171989.9
(22) Date of filing: 08.05.2023
(51) Int. Cl.: E21B 7/02, E21B 6/00, E21B 1/00, F16N 7/30, B25D 17/26, F16N 7/32

(54) **A METHOD AND AN ARRANGEMENT FOR PROTECTING A LUBRICATING SYSTEM OF A ROCK DRILLING MACHINE, AND A MINING MACHINE**
VERFAHREN UND ANORDNUNG ZUM SCHUTZ EINES SCHMIERSYSTEMS EINER GESTEINSBOHRMASCHINE UND BERGBAUMASCHINE
PROCÉDÉ ET AGENCEMENT POUR PROTÉGER UN SYSTÈME DE LUBRIFICATION D'UNE MACHINE DE FORAGE DE ROCHES, ET MACHINE D'EXPLOITATION MINIÈRE

(43) Date of publication of application: 13.11.2024
(73) Proprietor: Sandvik Mining and Construction Oy, 33330 Tampere (FI)
(72) Inventor: LESKINEN, Martti, 33330 Tampere (FI)
(74) Representative: Sandvik

(56) References cited:
- GB-A- 2 122 271
- US-A- 3 534 553
- US-A1- 2011 011 647

## Description

### FIELD OF THE INVENTION

The invention relates to a method for protecting a lubricating system of a rock drilling machine.

The invention relates also to an arrangement for protecting a lubricating system of a rock drilling machine.

Further, the invention relates to a mining machine.

### BACKGROUND OF THE INVENTION

Rock drilling rigs are used in rock drilling and excavating in underground mines, opencast mines, and excavation sites. Known methods used in rock drilling and excavation are cutting, crushing and percussive methods. Percussive methods are most commonly used with hard rock. In the percussive method, the drilling tools, such as drill rods and the drill bit at the end thereof, of one or more rock drilling machines in a rock drilling rig are both rotated around their longitudinal axes and impact toward the rock being drilled. The breaking of the rock occurs mainly due to the impact. The purpose of the rotation is mainly to ensure that the studs or other working parts of the drill bit always impact a new point of rock. For striking, the rock drilling machine may comprise a hydraulic percussion device, the percussion piston of which causes stress pulses to the drill shank and further to the drilling tools of the rock drilling machine, which stress pulses travel in the form of a compression stress wave to the drilling tools at the extreme end of the drill bit and on to the rock, making the rock break. Instead of a hydraulic percussion device, the rock drilling machine may comprise a percussion device, in which means based on electromagnetism, for instance, cause a stress pulse to the drill shank without a mechanically moving percussion piston or other percussion member.

Typically, the lubrication of the rotation mechanism of the drill shank in a rock drilling machine, which can later also be called a drilling machine, is done with pressurized air, in which lubricating oil is added to compressed air. This lubricating air circulates inside the drilling machine, lubricates the necessary points, and is finally led out of the drilling machine. In some cases, the air may be circulated back to the rock drilling rig, and the lubricating oil is separated from the air and disposed of or taken to be further processed for re-use. In some solutions, the rotation mechanism of the drill shank may be lubricated by means of a separate circulation oil lubrication circuit, but the splines of the drill shank are still lubricated using pressurized air lubrication. Some known solutions are disclosed in GB 2122271 A, US 3534553 A, and US 2011/011647 A.

One problem with a pressurized air lubrication-based lubrication solution is that moisture left in the air may affect corrosion in the components of the lubrication system of the rock drilling machine. In addition, especially in cold environments, lubricating conduits of the lubrication system of the rock drilling machine may freeze during use and/or non-use period of the machine, this may hamper lubrication and use of the rock drilling machine.

### OBJECTIVE OF THE INVENTION

An objective of the invention is to provide a novel method for protecting a lubricating system of a rock drilling machine.

Another further objective is to provide a novel arrangement for protecting a lubricating system of a rock drilling machine.

Another further objective is to provide a novel mining machine provided with a novel arrangement for protecting a lubricating system of a rock drilling machine.

### SUMMARY

According to a first aspect, there is provided a method for protecting a lubricating system of a rock drilling machine, the lubricating system comprising at least a lubricating source, and at least one lubricating conduit for conveying lubricant to the rock drilling machine and from the rock drilling machine.

The method comprises a step of conveying protective fluid to the lubricating conduit before the lubricant, and/or with the lubricant, and/or after the lubricant. The method comprises a step of collecting and re-circulating at least part of used protective fluid to the lubricating conduit.

The technical effect of one or more embodiments is that protective fluid is fed into the lubricating circuit for protecting the components of the lubricating circuit, minimizing corrosion and for avoidance of freezing of conduits of the lubricating circuits, for example during use and/or in a non-use period, in cold environments. The protective fluid may be fed in the lubricating conduit before the lubricant, and/or with the lubricant and/or after the lubricant. By collecting and re-circulating use and/or amount of the protective fluid may be kept at a minimum level or at a desired level.

The method for protecting a lubricating system of a rock drilling machine is characterized by what is stated in the independent claim.

Some other embodiments are characterized by what is stated in the other claims.

Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit subtasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

The method for protecting a lubricating system of a rock drilling machine the protective fluid comprises gas. An advantage for the protective fluid comprising gas is that gas may be used also with help of lubricating the rock drilling machine with help of lubricant and pressurized gas.

In an embodiment not covered by the claims the protective fluid may comprise liquid. An advantage for the protective fluid comprising liquid is that liquid may comprise anti-corrosive and/or anti-freeze agent.

In an embodiment not covered by the claims the protective fluid may comprise non-oxidising agent, such as inert gas, for example nitrogen, and/or anti-freeze agent, such as ethanol. An advantage for the protective fluid comprising non-oxidising agent and/or anti-freeze agent is that components of the lubricating circuit may be protected against corrosion and/or against freezing especially in cold environments. This helps to keep a production capacity of rock drilling machine at a high level.

In an embodiment of the method for protecting a lubricating system of a rock drilling machine the method may comprise a step of conveying the protective fluid from the protective fluid source, that is a gas container, such as a gas cylinder. An advantage for the fluid source being a gas container is that it is an uncomplicated device that is reliable and easy to implement with a rock drilling machine.

In an embodiment of the method for protecting a lubricating system of a rock drilling machine the method may comprise a step of generating the protective fluid by a gas generator, for example in a gas source, or in a vicinity of the gas source. An advantage for generating the protective fluid by gas generator is that it gives freedom to produce needed amount of gas.

In an embodiment of the method for protecting a lubricating system of a rock drilling machine the method may comprise protecting components of the lubrication system of the rock drilling machine from corrosion with help of the protecting fluid and/or preventing components of the lubrication system, such as fluid ducts, from freezing, for example during use and/or during non-use of the drilling machine. An advantage for these is that production capacity of the rock drilling machine may be kept at a high level also in cold environments.

In an embodiment of the method for protecting a lubricating system of a rock drilling machine the method may comprise a step of treating protective fluid before conducting the fluid to the lubricating circuit. An advantage for treating the protective fluid is that suitable treatment, such as drying of gas, may be made to the protective fluid.

The method for protecting a lubricating system of a rock drilling machine comprises a step of collecting and re-circulating at least part of used lubricant to the lubricating conduit. An advantage for this is that use and/or amount of lubricant may be kept at a minimum level or at a desired level.

In an embodiment of the method for protecting a lubricating system of a rock drilling machine the method may comprise a step of keeping the protecting fluid in the lubricating system of the rock drilling machine at least during a non-use of the rock drilling machine. An advantage for keeping the protecting fluid in the lubricating system of the rock drilling machine at least during a non-use of the rock drilling machine is that this may help of avoiding freezing of the conduits and components of the lubricating system of the rock drilling machine and minimizes a restarting time after the non-use period of the rock drilling machine.

According to a second aspect, there is provided an arrangement for protecting a lubricating system of a rock drilling machine, the lubricating system comprising at least a lubricating source and at least one lubricating conduit for conveying lubricant to the rock drilling machine and from the rock drilling machine. The arrangement is provided with a protective fluid source that is connectable to the at least one lubricating conduit of a lubricating circuit. An advantage for providing the arrangement with a protective fluid source that is connectable to the at least one lubricating conduit of a lubricating circuit is that lubricating circuit may be kept operational also in cold environments. By feeding protective fluid into the lubricating circuit a protection of the components of the lubricating circuit, minimizing of corrosion and avoidance of freezing of conduits of the lubricating circuits in cold environments may be achieved. The arrangement enables feeding of the protective fluid in the lubricating conduit before the lubricant, and/or with the lubricant and/or after the lubricant. The arrangement comprises means for collecting at least part of used protective fluid and means for re-circulating at least part of used protective fluid to the lubricating conduit. An advantage for this is that amount of protective fluid and/or lubricant may be kept at a minimum level or at a desired level.

In an embodiment of the arrangement for protecting a lubricating system of a rock drilling machine the fluid source may be configured to be connected to the at least lubricating conduit of the lubricating circuit between the lubricating source and the rock drilling machine. An advantage for connecting fluid source to the at least lubricating conduit of the lubricating circuit between the lubricating source and the rock drilling machine enables various alternatives for feed-in protective fluid in the lubrication circuit.

In an embodiment of the arrangement for protecting a lubricating system of a rock drilling machine the protective fluid source may be a gas container or a gas generator. An advantage of the protective fluid source being a gas container is that a gas container is an uncomplicated device that is reliable and easy to implement with a rock drilling machine. An advantage of the protective fluid source being a gas generator is that it gives freedom to produce needed amount of gas in the production site.

In an embodiment of the arrangement for protecting a lubricating system of a rock drilling machine the arrangement may comprise means for collecting at least part of used lubricant, and means for re-circulating at least part of used lubricant to the lubricating conduit. An advantage for this is that amount of lubricant may be kept at a minimum level or at a desired level.

According to a third aspect, there is provided a mining machine comprising an arrangement for protecting a lubricating system of a rock drilling machine.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic side view of a rock drilling rig,
**Figure 2** is a schematic side view of a rock drilling machine,
**Figure 3** is a schematic view of an embodiment of an arrangement for feeding protecting fluid to a lubricating system of a rock dill machine, and
**Figure 4** is a schematic view of an embodiment of an arrangement for feeding protecting fluid to a lubricating system of a rock dill machine.

In the figures, some embodiments are shown simplified for the sake of clarity. Similar parts are marked with the same reference numbers in the figures.

### DETAILED DESCRIPTION

According to an aspect, a method and an arrangement described in this description may be arranged in a mobile mining machine. The machine may be a mine machine, or a construction machine, e.g., a rock drilling rig, a development drill, a tunneling drilling machine, a surface drilling machine, a bolting or reinforcing vehicle, or a long hole drill rig.

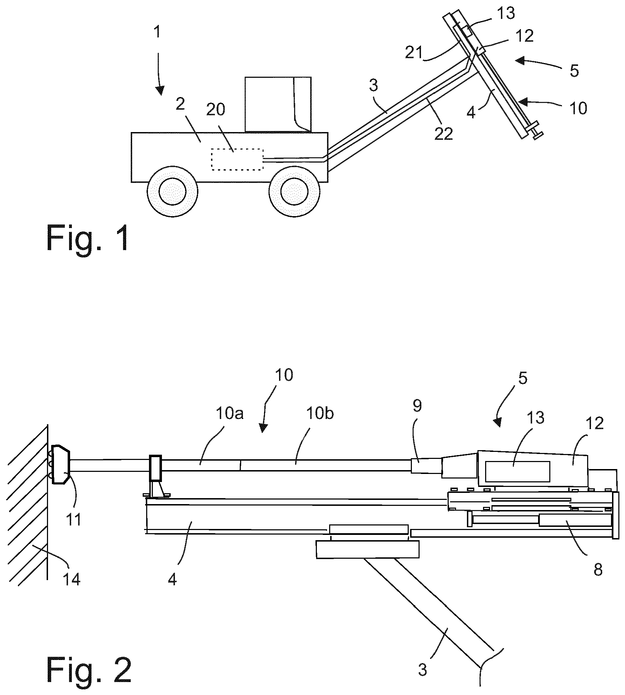

Figure 1 is a schematic side view of a rock drilling rig 1 shown in a simplified manner. The rock drilling rig 1 of Figure 1 comprises a carrier 2, one or more booms 3, and a feed beam 4 arranged to the free end of the boom 3. A rock drilling machine 5 or drilling machine 5 is further arranged to the feed beam 4. On the carrier 2 of the rock drilling rig 1, a pressure medium source, such as a hydraulic pump or the like, may also be arranged, and by means of the pressure formed thereby, pressure fluid is directed along a pressure circuit from a pressure medium container serving as storage for the pressure fluid to the rock drilling machine 5 for performing various functions thereof. On the rock drilling rig 1 a lubricating system 20 of the dock drilling machine 5 may be arranged. The lubrication system 20 may comprise a lubricating conduit 21 conveying a lubricant to the rock drilling machine 5. The system may comprise a return conduit 22 for returning at least part of the lubricant to a lubricant container. The lubrication system may comprise an arrangement for protection of the lubrication system of the rock drilling machine.

Figure 2 is a schematic side view of a rock drilling machine 5 that is arranged on the feed beam 4 movable with respect to the feed beam 4. The rock drilling machine 5 may be moved on the feed beam 4 by means of a feed device 8. The rock drilling machine 5 has a drill shank 9 to which the necessary drilling tools 10 may be connected, consisting of one or more drill rods 10a, 10b and a drill bit 11, for instance, the drilling tools 10 forming the tool 10 of the rock drilling machine 5. The rock drilling machine 5 may further have a percussion device 12 for causing stress pulses to the drill shank 9. In addition, the rock drilling machine 5 may have a rotation device 13, with which the drill shank 9 and the drilling tools 10 connected thereto may be rotated around their longitudinal axes. The drill shank 9 may transmit impact, rotation, and feed forces to the drilling tools 10 that transmit them on to the rock 14 being drilled. In an example embodiment the drill shank may also transmit flushing fluid via hollow drill rods 10a, 10b to the drilling tools.

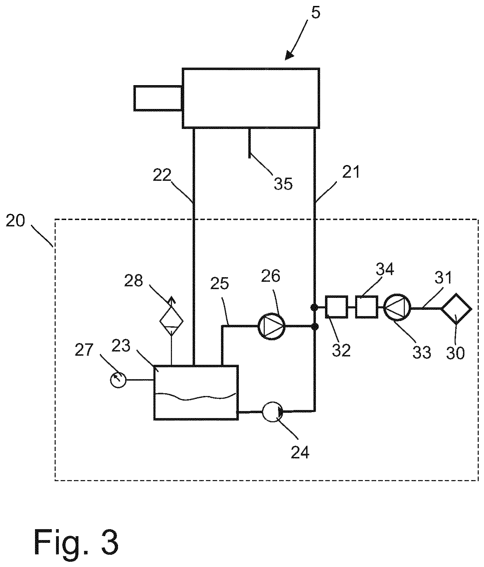

Figure 3 is a simplified schematic diagram of an embodiment of a lubricating system 20 of a rock drilling machine 5 provided with an arrangement for protecting the lubricating system of the rock drilling machine. The lubricating system comprises a lubricating conduit 21 to the rock drilling machine 5 and a return conduit 22 from the rock drilling machine 5. The lubricating 20 system may further comprise a tank 23 for lubricant. A pump device 24 may be arranged to feed lubricant from the tank 23 to the lubricating conduit 21. In an embodiment a return conduit 22 may be arranged from the rock drilling machine 5 to the tank 23 for conducting used lubricant and gas to the tank 23. In an embodiment gas may be conducted in addition to lubricant to the lubricating conduit 21 for feeding lubricant and the gas to the rock drilling machine 5. In an embodiment an upper conduit 25 may lead from an upper part of the tank 23 to the lubricating conduit 21, for re-circulating gas from the lubricating tank 23 to the lubricating conduit 21. The upper conduit 25 may be provided with a pump 26, such as a compressor, for re-circulating gas to the lubricating conduit 21. In an embodiment of the arrangement according to figure 3 a conduit 31 may be arranged for conducting protective fluid to the feed-in line 21 of the lubrication system of the rock drilling machine 5. In an embodiment the protective fluid may comprise gas and/or liquid. In an embodiment a fluid source 30 of the protective fluid may be connected by the conduit 31 to the lubricating conduit 21 of the lubricating system of the rock drilling machine 5. In an embodiment a fluid treatment device 34 may be arranged in the conduit 31 between the protective fluid source 30 and the lubricating conduit 21. In an embodiment the fluid treatment device 34 may be a gas treatment device. In an embodiment the fluid treatment device may be a dryer or a dehumidifier. In an embodiment the dryer may be a membrane dryer. In an embodiment the dryer may be a refrigerant type of dryer. In an embodiment the gas may be air led via conduit 31 to the lubricating conduit 21. In an embodiment gas may be inert gas, such as nitrogen. In an embodiment gas may be led by pump device 33, such as a compressor, to the lubricating conduit 21. In an embodiment instead of the pump device 33 or in addition of the pump device a gas generator may be provided in the conduit 31. In an embodiment conduit may be provided with a control device 32, such as a valve, for opening and closing a medium connection from the conduit 31 to the lubricating conduit 21. In an embodiment the tank 23 may be provided with a pressure sensor 27. In an embodiment the tank 23 may be provided with a vent, a breather valve 28, or a discharge for removing moisture.

In an embodiment the lubricant and/or gas circulation may be arranged as a closed loop circulation. However, some leaks such as gas leaks 35 may not be avoidable, and therefore conduit 31 may be used for conducting additional gas to the lubricating circuit. Moreover, conduit 31 may be configured for conducting protective fluid to the lubricating circuit of the rock drilling machine for a non-use period of the rock drilling machine.

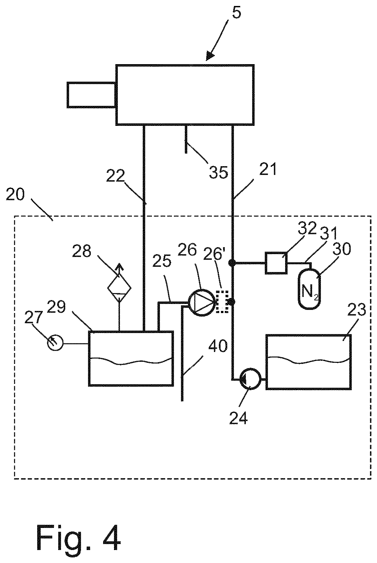

Figure 4 is a simplified schematic diagram of an embodiment of a lubricating system 20 of a rock drilling machine 5 provided with an arrangement for protecting the lubricating system of the rock drilling machine. In an embodiment of the arrangement according to figure 4 a conduit 31 may be arranged for conducting protective fluid to the feed-in line 21 of the lubrication system of the rock drilling machine 5. In an embodiment the protective fluid may comprise gas and/or liquid. In an embodiment a fluid source 30 of the protective fluid may be connected by the conduit 31 to the lubricating conduit 21 of the lubricating system of the rock drilling machine 5. In an embodiment conduit may be provided with a control device 32, such as a valve, for opening and closing a medium connection from the conduit 31 to the lubricating conduit 21. The lubricating 20 system may further comprise a tank 23 for lubricant. A pump device 24 may be arranged to feed lubricant from the tank 23 to the lubricating conduit 21. In an embodiment a return conduit 22 may be arranged for conducting used lubricant and gas from the rock drilling machine 5 to a return tank 29. In an embodiment gas may be conducted in addition to lubricant to the lubricating conduit 21 for feeding lubricant and the gas to the rock drilling machine 5. In an embodiment an upper conduit 25 may lead from an upper part of the return tank 29 to the lubricating conduit 21, for re-circulating gas from the return tank 29 to the lubricating conduit 21. The upper conduit 25 may be provided with a pump 26, such as a compressor, for re-circulating gas to the lubricating conduit 21. In an example embodiment the upper conduit 25 may be optionally provided with an intercooler 26' for cooling fluid in the conduit, for example between the pump 26 and the lubricating conduit 21. Gas is lead to the lubrication line 21 by pump device 26 via an upper conduit 25 from a return tank 29. In an embodiment an air conduit 40 may be arranged from outside the lubrication circuit. The pump 26 may be configured to feed gas from conduit 25 and/or from air conduit 40 to the lubricating line 21.

In an embodiment the lubricating arrangement may be provided with a lubricant tank 23 connected to the lubricating conduit 21. The lubricant is conducted from the tank 23 to the lubrication conduit by pump device 24.

In an embodiment protective fluid may be fed to the lubricating conduit before the lubricant, and/or with the lubricant, and/or after the lubricant. In an embodiment the protective fluid may comprise gas. In an embodiment the protective fluid may comprise liquid. In an embodiment the protective fluid may comprise non-oxidising agent, such as inert gas, for example nitrogen. In an embodiment the protective fluid may comprise anti-freeze agent, such as ethanol. In an embodiment the protective fluid source 30 may be a gas container, such as a gas cylinder.

In an embodiment of the arrangement may comprise a gas generator. In an embodiment the gas generator may be arranged, for example in a gas source 30, or in a vicinity of the gas source 30.

In an embodiment the arrangement is configured for protecting components of the lubrication system of the rock drilling machine from corrosion with help of the protecting fluid and/or preventing components of the lubrication system, such as fluid ducts, from freezing, for example during use and/or during non-use of the drilling machine. If fluid, such as liquid, for example water, is freezing in the conduit a plug may be formed in the conduit, and the formed plug may prevent circulation of fluid in the conduit.

In an embodiment the arrangement may be configured to treat protective fluid before conducting the protective fluid to the lubricating circuit. In an embodiment the arrangement may comprise a gas treating device for treating the protective fluid. In an embodiment the treating device may be a gas dryer.

In an embodiment the arrangement may be configured to collect at least part of used protective fluid and/or used lubricant and to re-circulate at least part of used protective fluid and/or used lubricant to the lubricating conduit.

In an embodiment the arrangement may be configured for keeping the protecting fluid in the lubricating system of the rock drilling machine at least during a non-use of the rock drilling machine. This may help to keep conduits in non-freezing conditions. In addition protective fluid may help to keep conduits and components of the lubricating circuit of the rock drill machine in non-corrosive conditions.

In an embodiment of a mining machine may comprise an arrangement according to any one of embodiments mentioned above. The machine may be a mine machine, or a construction machine, e.g., a rock drilling rig, a development drill, a tunneling drilling machine, a surface drilling machine, a bolting or reinforcing vehicle, or a long hole drill rig.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for protecting a lubricating system of a rock drilling machine (5), the lubricating system comprising at least a lubricating source (23) and lubricating conduits (21, 22) for conveying lubricant to the rock drilling machine (5) and from the rock drilling machine, **characterized in that** the method comprises a step of conveying protective fluid for protecting components of the lubricating system against corrosion and/or against freezing to at least one lubricating conduit of the lubricating system before the lubricant, and/or with the lubricant, and/or after the lubricant, and wherein the method further comprises a step of collecting and re-circulating at least part of used protective fluid to the lubricating conduit, wherein the protective fluid comprises gas.

2. A method according to claim 1, wherein the method comprises a step of conveying the protective fluid from the protective fluid source (30), that is a gas container, such as a gas cylinder.

3. A method according to claim 1 or 2, wherein the method comprises a step of generating the protective fluid by a gas generator, for example in a gas source (30), or in a vicinity of the gas source (30).

4. A method according to any one of claims 1 to 3, wherein the method comprises protecting components of the lubricating system of the rock drilling machine from corrosion with help of the protecting fluid and/or preventing components of the lubricating system, such as fluid ducts, from freezing.

5. A method according to any one of claims 1 to 4, wherein the method comprises a step of treating protective fluid before conducting the fluid to the lubricating system.

6. A method according to any one of claims 1 to 5, wherein the method comprises a step of collecting and re-circulating at least part of used lubricant to the lubricating conduit.

7. A method according to any one of claims 1 to 6, wherein the method comprises a step of keeping the protecting fluid in the lubricating system of the rock drilling machine at least during a non-use of the rock drilling machine.

8. An arrangement for protecting a lubricating system of a rock drilling machine, the lubricating system comprising at least a lubricating source (23) and lubricating conduits (21, 22) for conveying lubricant to the rock drilling machine (5) and from the rock drilling machine, **characterized in that** the arrangement is provided with a source (30) of protective fluid for protecting components of the lubricating system against corrosion and/or against freezing that is connectable to at least one lubricating conduit (21) of the lubricating system, wherein the arrangement comprises means for collecting at least part of used protective fluid and means for re-circulating at least part of used protective fluid to the lubricating conduit, and wherein the protective fluid comprises gas.

9. An arrangement according to claim 8, wherein the fluid source (30) is configured to be connected to the at least lubricating conduit (21) of the lubricating system between the lubricating source (23) and the rock drilling machine (5).

10. An arrangement according to claim 8 or 9, wherein the protective fluid source (30) is a gas container or a gas generator.

11. An arrangement according to any one of claims 8 to 10, wherein the arrangement comprises means for collecting at least part of used lubricant, and means for re-circulating at least part of used lubricant to the lubricating conduit.

12. Mining machine comprising at least one rock drilling machine (5) and an arrangement for protecting a lubricating system of a rock drilling machine according to any one of claims 8 to 11.

## Patentansprüche

1. Verfahren zum Schützen eines Schmiersystems einer Gesteinsbohrmaschine (5), wobei das Schmiersystem mindestens eine Schmierquelle (23) und Schmierleitungen (21, 22) zum Befördern von Schmiermittel zu der Gesteinsbohrmaschine (5) und von der Gesteinsbohrmaschine umfasst, **dadurch gekennzeichnet, dass** das Verfahren einen Schritt zum Befördern von Schutzfluid zum Schützen von Komponenten des Schmiersystems vor Korrosion und/oder vor Einfrieren an mindestens eine Schmierleitung des Schmiersystems vor dem Schmiermittel und/oder mit dem Schmiermittel und/oder nach dem Schmiermittel umfasst, und wobei das Verfahren weiter einen Schritt zum Sammeln und Rückführen mindestens eines Teils des verwendeten Schutzfluids zu der Schmierleitung umfasst, wobei das Schutzfluid Gas umfasst.

2. Verfahren nach Anspruch 1, wobei das Verfahren einen Schritt zum Befördern des Schutzfluids aus der Schutzfluidquelle (30), die ein Gasbehälter wie eine Gasflasche ist, umfasst.

3. Verfahren nach Anspruch 1 oder 2, wobei das Verfahren einen Schritt zum Erzeugen des Schutzfluids durch einen Gasgenerator, beispielsweise in einer Gasquelle (30) oder in der Nähe der Gasquelle (30), umfasst.

4. Verfahren nach einem der Ansprüche 1 bis 3, wobei das Verfahren Schützen von Komponenten des Schmiersystems der Gesteinsbohrmaschine vor Korrosion mit Hilfe des Schutzfluids und/oder Verhindern des Einfrierens von Komponenten des Schmiersystems, wie Fluidkanälen, umfasst.

5. Verfahren nach einem der Ansprüche 1 bis 4, wobei das Verfahren einen Schritt zum Behandeln von Schutzfluid vor einem Leiten des Fluids zu dem Schmiersystem umfasst.

6. Verfahren nach einem der Ansprüche 1 bis 5, wobei das Verfahren einen Schritt zum Sammeln und Rückführen mindestens eines Teils des verwendeten Schmiermittels zu der Schmierleitung umfasst.

7. Verfahren nach einem der Ansprüche 1 bis 6, wobei das Verfahren einen Schritt zum Einbehalten des Schutzfluids in dem Schmiersystem der Gesteinsbohrmaschine mindestens während einer Nichtverwendung der Gesteinsbohrmaschine umfasst.

8. Anordnung zum Schützen eines Schmiersystems einer Gesteinsbohrmaschine, wobei das Schmiersystem mindestens eine Schmierquelle (23) und Schmierleitungen (21, 22) zum Befördern von Schmiermittel der Gesteinsbohrmaschine (5) und von der Gesteinsbohrmaschine umfasst, **dadurch gekennzeichnet, dass** die Anordnung mit einer Schutzfluidquelle (30) zum Schützen von Komponenten des Schmiersystems vor Korrosion und/oder vor Einfrieren versehen ist, die mit mindestens einer Schmierleitung (21) des Schmiersystems verbindbar ist, wobei die Anordnung Mittel zum Sammeln mindestens eines Teils des verwendeten Schutzfluids und Mittel zum Rückführen mindestens eines Teils des verwendeten Schutzfluids zu der Schmierleitung umfasst, und wobei das Schutzfluid Gas umfasst.

9. Anordnung nach Anspruch 8, wobei die Fluidquelle (30) dazu konfiguriert ist, mindestens mit der Schmierleitung (21) des Schmiersystems zwischen der Schmierquelle (23) und der Gesteinsbohrmaschine (5) verbunden zu sein.

10. Anordnung nach Anspruch 8 oder 9, wobei die Schutzfluidquelle (30) ein Gasbehälter oder ein Gasgenerator ist.

11. Anordnung nach einem der Ansprüche 8 bis 10, wobei die Anordnung Mittel zum Sammeln mindestens eines Teils des verwendeten Schmiermittels und Mittel zum Rückführen mindestens eines Teils des verwendeten Schmiermittels zu der Schmierleitung umfasst.

12. Bergbaumaschine, die mindestens eine Gesteinsbohrmaschine (5) und eine Anordnung zum Schützen eines Schmiersystems einer Gesteinsbohrmaschine nach einem der Ansprüche 8 bis 11 umfasst.

## Revendications

1. Procédé de protection d'un système de lubrification d'une machine de forage de roches (5), le système de lubrification comprenant au moins une source de lubrification (23) et des conduits de lubrification (21, 22) pour transporter un lubrifiant vers la machine de forage de roches (5) et depuis la machine de forage de roches, **caractérisé en ce que** le procédé comprend une étape de transport d'un fluide de protection pour protéger des composants du système de lubrification contre la corrosion et/ou contre le gel vers au moins un conduit de lubrification du système de lubrification avant le lubrifiant, et/ou avec le lubrifiant, et/ou après le lubrifiant, et dans lequel le procédé comprend en outre une étape de collecte et de remise en circulation d'au moins une partie du fluide de protection usagé vers le conduit de lubrification, dans lequel le fluide de protection comprend du gaz.

2. Procédé selon la revendication 1, dans lequel le procédé comprend une étape de transport du fluide de protection à partir de la source de fluide de protection (30), qui est un récipient à gaz, tel qu'une bouteille de gaz.

3. Procédé selon la revendication 1 ou 2, dans lequel le procédé comprend une étape de génération du fluide de protection par un générateur de gaz, par exemple dans une source de gaz (30), ou à proximité de la source de gaz (30).

4. Procédé selon l'une quelconque des revendications 1 à 3, dans lequel le procédé comprend la protection de composants du système de lubrification de la machine de forage de roches contre la corrosion à l'aide du fluide de protection et/ou la prévention du gel de composants du système de lubrification, tels que les conduits de fluide.

5. Procédé selon l'une quelconque des revendications 1 à 4, dans lequel le procédé comprend une étape de traitement d'un fluide de protection avant de conduire le fluide vers le système de lubrification.

6. Procédé selon l'une quelconque des revendications 1 à 5, dans lequel le procédé comprend une étape de collecte et de remise en circulation d'au moins une partie du lubrifiant usagé vers le conduit de lubrification.

7. Procédé selon l'une quelconque des revendications 1 à 6, dans lequel le procédé comprend une étape de maintien du fluide de protection dans le système de lubrification de la machine de forage de roches au moins pendant une non-utilisation de la machine de forage de roches.

8. Agencement de protection d'un système de lubrification d'une machine de forage de roches, le système de lubrification comprenant au moins une source de lubrification (23) et des conduits de lubrification (21, 22) pour transporter un lubrifiant vers la machine de forage de roches (5) et depuis la machine de forage de roches, **caractérisé en ce que** l'agencement est pourvu d'une source (30) de fluide de protection pour protéger des composants du système de lubrification contre la corrosion et/ou contre le gel qui peut être raccordée à au moins un conduit de lubrification (21) du système de lubrification, dans lequel l'agencement comprend des moyens de collecte d'au moins une partie du fluide de protection usagé et des moyens de remise en circulation d'au moins une partie du fluide de protection usagé vers le conduit de lubrification, et dans lequel le fluide de protection comprend du gaz.

9. Agencement selon la revendication 8, dans lequel la source de fluide (30) est configurée pour être raccordée à le au moins un conduit de lubrification (21) du système de lubrification entre la source de lubrification (23) et la machine de forage de roches (5).

10. Agencement selon la revendication 8 ou 9, dans lequel la source de fluide de protection (30) est un récipient à gaz ou un générateur de gaz.

11. Agencement selon l'une quelconque des revendications 8 à 10, dans lequel l'agencement comprend des moyens de collecte d'au moins une partie du lubrifiant usagé et des moyens de remise en circulation d'au moins une partie du lubrifiant usagé vers le conduit de lubrification.

12. Machine d'exploitation minière comprenant au moins une machine de forage de roches (5) et un agencement de protection d'un système de lubrification d'une machine de forage de roches selon l'une quelconque des revendications 8 à 11.
